# EUROPEAN PATENT APPLICATION

(11) **EP 4 343 725 A1**
(43) Date of publication of application: **27.03.2024**
(21) Application number: 23190745.2
(22) Date of filing: 10.08.2023
(51) Int. Cl.: G07G 1/00, G07G 1/06

(54) **CHECKOUT DEVICE AND METHOD**

(30) Priority: 26.09.2022 JP 2022152543
(71) Applicant: Toshiba TEC Kabushiki Kaisha, Tokyo 141-8562 (JP)
(72) Inventor: Sonaga, Sayo, Tokyo 141-8562 (JP); Tsunoda, Mayuko, Tokyo 141-8562 (JP); Okuma, Yumiko, Tokyo 141-8562 (JP); Hidaka, Shiori, Tokyo 141-8562 (JP); Sato, Maki, Tokyo 141-8562 (JP)
(74) Representative: Bandpay & Greuter

(57) **Abstract**

According to an embodiment, a checkout device has a processor configured to acquire merchandise information for an item being registered for purchase in a transaction, and then execute a settlement process for the transaction based on the acquired merchandise information. The processor is configured to cause a display screen to display, on the same screen at the same time, a first display area in which a transaction amount for the transaction is displayed, a second display area in which at least one settlement method to be used for the settlement process is displayed in a selectable manner, and a third display area in which information about a selected settlement method is displayed.

## Description

### Field

An embodiment of the present disclosure relates to a checkout device and a method for a checkout device.

### Background

In a store in which merchandise or services (hereinafter collectively referred to as "merchandise") are sold, a checkout device such as a point-of-sales (POS) terminal is used. The POS terminal acquires information about the items of merchandise being purchased by a customer and executes a settlement process based on the acquired merchandise information.

The POS terminal displays various information necessary for the operations of an operator in the settlement process. For example, the POS terminal displays information such as registered merchandise information, a transaction amount (a total amount due for purchased merchandise), and a settlement method selection operation element. The POS terminal could have improved operability by improving the display method for the various information displayed in the settlement process.

In related art, there is a proposed POS terminal in which two display areas are formed on a single display screen, and a software keyboard operable by an operator is displayed in one of these display areas to improve operability. However, in such a POS terminal in the related art, there remains room for improvement with regard to display of information related selections and changes of a settlement method.

### DISCLOSURE OF THE PRESENT INVENTION

To this end, a checkout device and a non-transitory, computer-readable medium storing program instructions according to appended claims are provided.

According to the present invention, the checkout device comprises a processor configured to:
acquire merchandise information for an item being registered for purchase in a transaction;
execute a settlement process for the transaction based on the acquired merchandise information; and
cause a display screen to display, on the same screen at the same time:
   a first display area in which a transaction amount for the transaction is displayed,
   a second display area in which at least one settlement method to be used for the settlement process is displayed in a selectable manner, and
   a third display area in which information about a selected settlement method is displayed.

Preferably, an operation element for input of information necessary for performing the selected settlement method is displayed in the third display area as the information about the selected settlement method.

Preferably, an operation guidance for guiding a user operation according to the selected settlement method is displayed in the third display areas as the information about the selected settlement method.

Preferably, the processor is configured to shift screens displayed on the display screen without changing the positions and sizes of the first display area, the second display area, and the third display area.

Preferably, an operation element corresponding to a settlement method is displayed in the second display area, and
an icon indicating information about a subsequent process to be performed when using the corresponding settlement method is displayed in association with the operation element.

### BRIEF DESCRIPTION OF THE DRAWINGS

FIG. 1 is a perspective view showing an overall configuration of a POS system according to an embodiment.
FIG. 2 is a block diagram of a POS terminal according to an embodiment.
FIG. 3 is a block diagram depicting certain functional aspects of a control unit (controller) of a POS terminal according to an embodiment.
FIG. 4 is a flow chart of a transaction flow in a POS system according to an embodiment.
FIG. 5 is a flow chart of a checkout process performed by a control unit of a POS terminal according to an embodiment.
FIG. 6 shows a registration screen of a POS terminal according to an embodiment.
FIG. 7 shows a selection screen of a POS terminal according to an embodiment.
FIG. 8 shows a cash settlement screen of a POS terminal according to an embodiment.
FIG. 9 shows a settlement completion screen of a POS terminal according to an embodiment.
FIG. 10 shows a money coupon (voucher) settlement screen of a POS terminal according to an embodiment.
FIG. 11 shows a credit settlement screen of a POS terminal according to an embodiment.
FIG. 12 shows an electronic money settlement screen of a POS terminal according to an embodiment.
FIG. 13 shows a code settlement screen of a POS terminal according to an embodiment.
FIG. 14 shows the cash settlement screen of a POS terminal according to a modification of an embodiment.
FIG. 15 shows an example of a personal information display unit of a POS terminal according to a modification.
FIG. 16 shows another example of a personal information display unit of a POS terminal according to a modification.

### DETAILED DESCRIPTION

The present disclosure describes a technological solution to existing problems related to ease of operation of checkout devices in the related art and provides a checkout device and a method having improved operability.

According to an embodiment, a checkout device includes a processor configured to acquire merchandise information for an item being registered for purchase in a transaction, and execute a settlement process for the transaction based on the acquired merchandise information. The processor is also configured to cause a display screen to display, on the same screen at the same time, a first display area in which a transaction amount for the transaction is displayed, a second display area in which at least one settlement method to be used for the settlement process is displayed in a selectable manner, and a third display area in which information about a selected settlement method is displayed.

Hereinafter, a checkout device and a method according to an example embodiment will be described with reference to the drawings. The present disclosure is not limited to the specific example embodiments. For example, in one embodiment a POS terminal used in a two-person POS system operated by two operators is used as the checkout device, but in other example the checkout device may be a typical POS terminal operated by a single operator.

In some examples, the checkout device may be a device operated by a customer (such as one in a semi-self-service-type POS system with a registration device at which a store clerk performs merchandise registration, and a checkout device at which a customer performs a settlement process or a self-service POS terminal at which a customer performs merchandise registration and a settlement process. In some examples, the checkout device may be a tablet-type POS terminal connected in a wired or wireless manner to a peripheral device such as a printer that prints a receipt or a scanner that reads a merchandise code for identifying a merchandise. The checkout device may execute a settlement process according to a settlement method selectable by a customer.

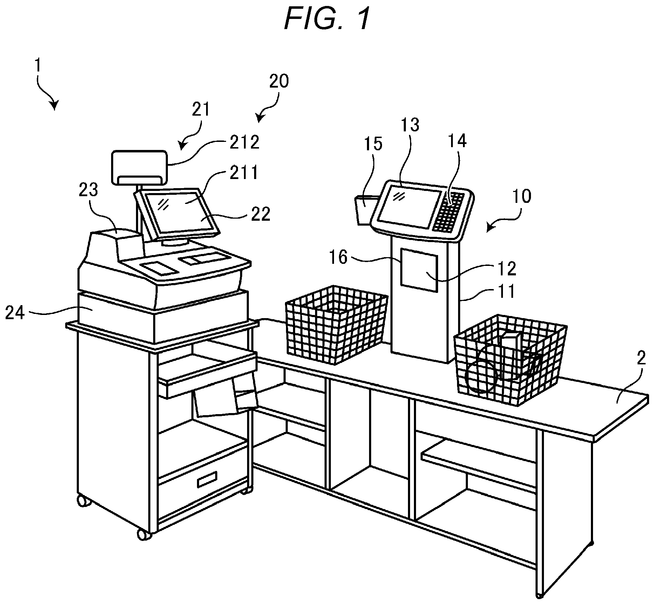

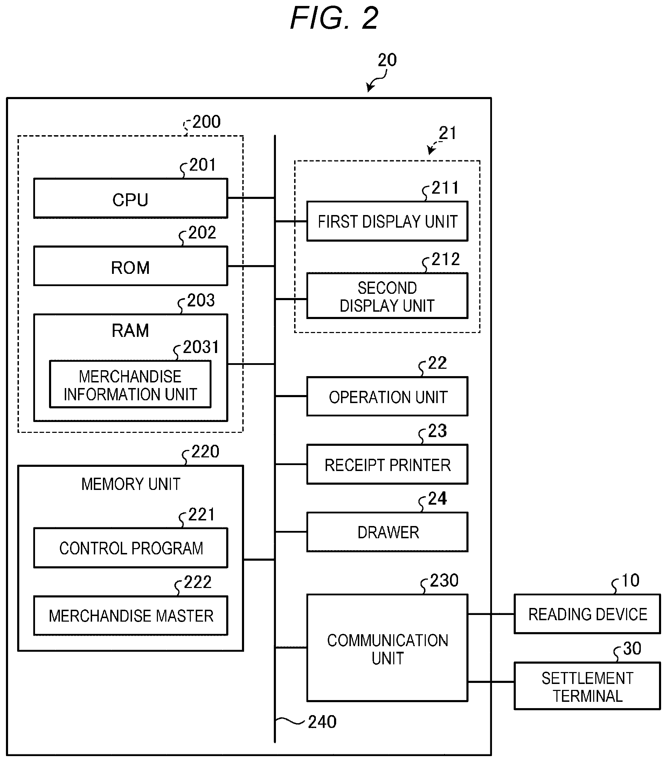

FIG. 1 is a perspective view showing an overall configuration of a POS system 1. The POS system 1 includes a reading device 10 operated by a checker who performs an operation related to merchandise registration, a POS terminal 20 operated by a cashier who performs an operation related to a settlement process, and a settlement terminal 30 (see FIG. 2). In the following description, when the checker and the cashier are not particularly distinguished from each other, the checker and/or the cashier may be referred to as an operator.

The reading device 10 and the POS terminal 20 are communicably connected via a network. In addition, the POS terminal 20 is communicably connected to the settlement terminal 30. The POS terminal 20 may incorporate the function of the settlement terminal 30. The reading device 10 reads merchandise information from merchandise being purchased by a customer and transmits the merchandise information to the POS terminal 20. The POS terminal 20 executes a settlement process based on the received merchandise information. The settlement terminal 30 executes a process related to payment in a cashless settlement in cooperation with the POS terminal 20. The settlement process is a process performed by the POS terminal 20 to complete payment of the purchase price. The POS terminal 20 is an example of a checkout device.

The reading device 10 is provided on a sacker table 2 on which a shopping basket or the like containing merchandise can be placed. The sacker table is in a position between a checker and a customer facing each other. The POS terminal 20 is provided in the vicinity of one end of the sacker table 2.

The reading device 10 includes a main body 11, an imaging unit 12, a checker display unit 13, an operation unit 14, and a customer display unit 15.

The main body 11 is formed in a substantially rectangular parallelepiped shape and is erected on the sacker table 2. An imaging window 16 is provided in the main body 11 on a side where the checker stands. The imaging unit 12 is provided behind the imaging window 16. The imaging unit 12 includes an imaging element, such as a charge-coupled device (CCD) or a complementary MOS (CMOS), and an imaging lens.

The imaging unit 12 captures an image of an item merchandise held in front of the imaging window 16. The reading device 10 extracts, from the image captured by the imaging unit 12, a code symbol such as a bar code attached to the merchandise and reads a merchandise code from the extracted code symbol. Here, the merchandise code is an example of merchandise information for identifying the merchandise. In some examples, reading device 10 may read the merchandise code by generic object recognition (object recognition). In this example, reading device 10 transmits the read merchandise code to the POS terminal 20.

In addition, the imaging unit 12 captures an image of a code symbol on a medium (e.g., a membership card, a smartphone, or the like) owned by the customer. The reading device 10 extracts the code symbol from the image and reads a membership code from the extracted code symbol. The reading device 10 transmits the just read membership code to the POS terminal 20.

The checker display unit 13 is a display device that displays information to the checker that operates the reading device 10. The checker display unit 13 is provided above the imaging window 16. The checker display unit 13 is a display implemented by a display device such as a liquid crystal display (LCD). The checker display unit 13 displays merchandise information such as a merchandise name and a price that were acquired based on the merchandise code read by the reading device 10. The reading device 10 acquires the merchandise information from the POS terminal 20 that stores a merchandise master in which merchandise codes are associated with information such as a merchandise name, a price, and the like.

The operation unit 14 is adjacent to the checker display unit 13. The operation unit 14 is implemented as a keyboard and includes various keys for manually inputting a merchandise code or the like. The operation unit 14 is operated for inputting a merchandise code of merchandise without a readable code symbol attached.

The customer display unit 15 is a display device that displays information to the customer and is supported by a side portion of the main body 11. The customer display unit 15 is, for example, a display device such as an LCD equipped with a touch panel. The customer display unit 15 can display the merchandise information based on the merchandise code read by the reading device 10. In addition, the customer display unit 15 displays an input screen for the customer to input information as necessary. For example, the customer display unit 15 displays an input screen on which an operation element to be pressed/selected when the customer wants to purchase a plastic bag or wants disposable chopsticks is displayed.

Next, the POS terminal 20 will be described. The POS terminal 20 includes a display unit 21, an operation unit 22, a receipt printer 23, and a drawer 24.

The display unit 21 includes a first display unit 211 (cashier display unit) and a second display unit 212 (customer display unit). The first display unit 211 displays, to the cashier, various types of information such as merchandise information about an item of merchandise being subjected to merchandise registration, a transaction amount, an operation element for selecting a settlement method, and an operation element for inputting information necessary for a settlement process which may vary according to the selected settlement method. The first display unit 211 displays a first display area, a second display area, and a third display area on one screen. The second display unit 212 displays, to the customer, various types of information such as a total transaction amount.

The operation unit 22 includes a touch panel provided on a surface of the first display unit 211. The operation unit 22 provides information corresponding to a position touched by the cashier to a control unit 200 (see FIG. 2).

The receipt printer 23 is implemented by, for example, a thermal printer, and dispenses a receipt on which information about a transaction is printed. The information about a transaction is merchandise information (e.g., a list of registered items and names), a transaction amount, or the like for a merchandise purchased by the customer in the transaction.

The drawer 24 is an openable and closable storage device that stores money according to denominations and can be opened (released) according to an instruction signal from the control unit 200.

FIG. 2 is a block diagram of the POS terminal 20. The POS terminal 20 includes a control unit 200, a memory 220, a first display unit 211, a second display unit 212, an operation unit 22, a receipt printer 23, a drawer 24, and a communication unit 230. The control unit 200, the memory 220, the first display unit 211, the second display unit 212, the operation unit 22, the receipt printer 23, the drawer 24, and the communication unit 230 are connected via a bus 240 or the like.

The control unit 200 can have a computer configuration and includes a central processing unit (CPU) 201, a read-only memory (ROM) 202, and a random access memory (RAM) 203. The CPU 201, the ROM 202, and the RAM 203 are connected via the bus 240.

The CPU 201 controls the overall operation of the POS terminal 20. The ROM 202 stores various programs such as programs used for driving the CPU 201 and various types of data. The RAM 203 is used as a work area of the CPU 201 and various programs and various types of data stored in the ROM 202 and the memory 220 are loaded into the RAM 203. The control unit 200 executes various control processes of the POS terminal 20 when the CPU 201 operates according to a control program that is stored in the ROM 202 or the memory 220.

In addition, the RAM 203 includes a merchandise information unit 2031. The merchandise information unit 2031 stores merchandise information regarding items of merchandise being purchased by the customer. Specifically, the merchandise information unit 2031 stores the merchandise information read from the memory 220 based on the merchandise codes acquired from the reading device 10 or the like. Registration of the merchandise information in the merchandise information unit 2031 is also referred to as merchandise registration or a merchandise registration operation.

The memory 220 includes a storage medium such as a hard disk drive (HDD) or a flash memory and maintains stored contents even when power is off. The memory 220 stores a control program 221 and a merchandise master 222.

The control program 221 is a program for implementing the functions of registering merchandise information, executing a settlement process based on the registered merchandise information, displaying various types of information on the display unit 21, and the like.

The merchandise master 222 is a master file in which merchandise information for all items of merchandise sold by the store is stored. The merchandise master 222 can be transmitted from a store server and stored in the memory 220. Since merchandise available in the store might change every day or the like, the merchandise master 222 can be updated as appropriate. In the merchandise master 222, information about merchandise, such as a merchandise name, a price, and a merchandise image is stored in association with a corresponding merchandise code.

The configurations and functions of the first display unit 211, the second display unit 212, the operation unit 22, the receipt printer 23, and the drawer 24 are described above, and redundant description thereof will be omitted. The communication unit 230 is an interface for communicating with external devices such as the reading device 10 and the settlement terminal 30. The control unit 200 can transmit and receive information (data) to and from an external device by being connected to the external device via the communication unit 230.

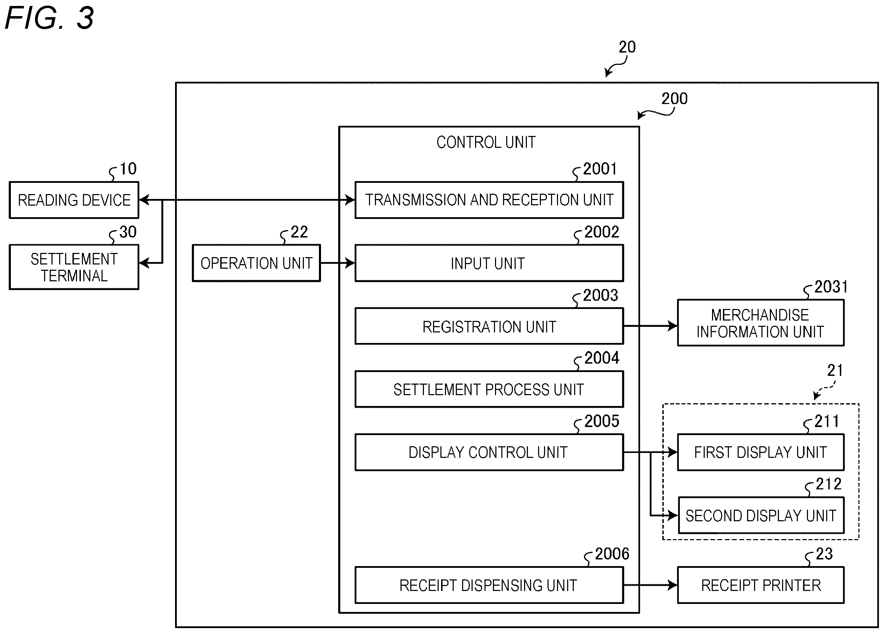

Next, a functional configuration of the control unit 200 of the POS terminal 20 will be described. FIG. 3 is a block diagram showing a main functional configuration of the control unit 200 of the POS terminal 20. By the CPU 201 operating according to the control program stored in the ROM 202 or the memory 220, the control unit 200 functions as a transmission and reception unit 2001, an input unit 2002, a registration unit 2003, a settlement process unit 2004, a display control unit 2005, and a receipt dispensing unit 2006. Each function may be implemented by using hardware such as a dedicated circuit.

The transmission and reception unit 2001 transmits and receives various types of information to and from the reading device 10 and the settlement terminal 30. For example, the transmission and reception unit 2001 receives, from the reading device 10, the merchandise code read by the reading device 10 from the code symbol attached to the merchandise. The transmission and reception unit 2001 functions as an acquisition unit that acquires merchandise information about a transaction object. The transmission and reception unit 2001 also transmits merchandise information registered by the registration unit 2003 to the reading device 10.

When the customer pays a purchase price by cashless settlement such as credit settlement, electronic money settlement, and code settlement, the transmission and reception unit 2001 transmits transaction information for one transaction including a transaction amount and the like to the settlement terminal 30. After the settlement terminal 30 communicates with a settlement server of a settlement provider to complete a process related to transaction amount settlement, the transmission and reception unit 2001 receives a settlement completion notification from the settlement terminal 30.

Various types of information are input to the input unit 2002 from the operation unit 22. For example, information for specifying a settlement method related to a transaction is input to the input unit 2002. In addition, information indicating an amount of cash deposited by the customer and information indicating an amount of a gift certificate or a coupon voucher are input to the input unit 2002.

The registration unit 2003 executes merchandise registration. Specifically, the registration unit 2003 reads, from the merchandise master 222, information corresponding to the merchandise code received by the transmission and reception unit 2001. Then, the registration unit 2003 registers, in the merchandise information unit 2031, merchandise information in which the merchandise code is associated with the read information.

The settlement process unit 2004 executes a settlement process of a transaction based on the merchandise information acquired by the transmission and reception unit 2001. In other words, the settlement process unit 2004 executes a process for the customer to complete the payment of the purchase price. For example, the settlement process unit 2004 calculates a total amount (transaction amount) of merchandise subjected to merchandise registration. When the customer pays by cash settlement, the settlement process unit 2004 compares an amount received from the customer with the transaction amount and calculates a coin amount as necessary.

When the customer pays by money coupon settlement such as by a gift certificate or a coupon voucher, the settlement process unit 2004 compares a money coupon amount input to the input unit 2002 to the transaction amount and calculates the change back amount as necessary. At this time, the settlement process unit 2004 refers to money coupon information stored in the memory 220 to determine whether a money coupon being used by the customer is a type for which change back may be paid to the customer.

If the customer pays the purchase price by cashless settlement such as credit settlement, electronic money settlement, or code settlement, the settlement process unit 2004 determines information to be transmitted to the settlement terminal 30. The settlement process unit 2004 determines that the process necessary for settlement has been completed based on a settlement completion notification received by the transmission and reception unit 2001 from the settlement terminal 30.

The display control unit 2005 displays, on the display unit 21, various types of information. For example, in the settlement process, the display control unit 2005 displays, on one screen of the first display unit 211, a first display area 81 in which the transaction amount of the transaction on which the settlement process is performed by the settlement process unit 2004 is displayed, a second display area 82 in which a settlement method to be performed by the settlement process unit 2004 according to the transaction amount is displayed in a selectable manner, and a third display area 83 in which information for a selected settlement method is displayed.

The receipt dispensing unit 2006 controls the receipt printer 23 to dispense a receipt according to one transaction from the receipt printer 23. The receipt dispensing unit 2006 may dispense an electronic receipt. For example, the receipt dispensing unit 2006 may output an instruction to send (dispense) the electronic receipt to an electronic receipt server that transmits electronic receipt information to a mobile terminal of the customer.

Next, the settlement terminal 30 will be described. The settlement terminal 30 enables payment by electronic money settlement. For example, the settlement terminal 30 acquires transaction information including the transaction amount from the POS terminal 20. In addition, the settlement terminal 30 accesses a medium storing amount information indicating a remaining balance of electronic money by using a near-range wireless communication technology such as near field communication (NFC) to read the amount information. The settlement terminal 30 writes an amount information obtained by subtracting the transaction amount from the read amount information in the medium. The settlement terminal 30 transmits a user ID read from the medium to an electronic money server. The settlement terminal 30 can also transmit the written amount information, the transaction amount, and the like in association with the user ID to the electronic money server.

In addition, the settlement terminal 30 enables payment by credit settlement and code settlement. For example, the settlement terminal 30 acquires transaction information including the transaction amount from the POS terminal 20. In addition, the settlement terminal 30 reads customer information necessary for credit settlement or code settlement from a credit card or a medium. The settlement terminal 30 transmits the acquired transaction information and the read customer information to a settlement server.

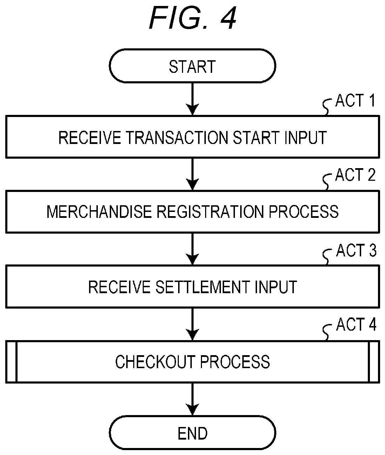

Next, a transaction flow using the POS system 1 will be described. FIG. 4 is a flow chart showing the transaction flow in the POS system 1.

When the customer brings a purchased merchandise to the POS system, a transaction start input is performed by an operation of the operator. Accordingly, the POS system 1 receives the transaction start input (ACT 1). The transaction start input is performed, for example, by the checker operating the operation unit 14 of the reading device 10 or by the cashier operating the operation unit 22 of the POS terminal 20.

Next, the reading device 10 reads a merchandise code of the merchandise purchased by the customer and transmits the merchandise code to the POS terminal 20 based on an operation of the checker. The POS terminal 20 executes merchandise registration based on the received merchandise code (ACT 2).

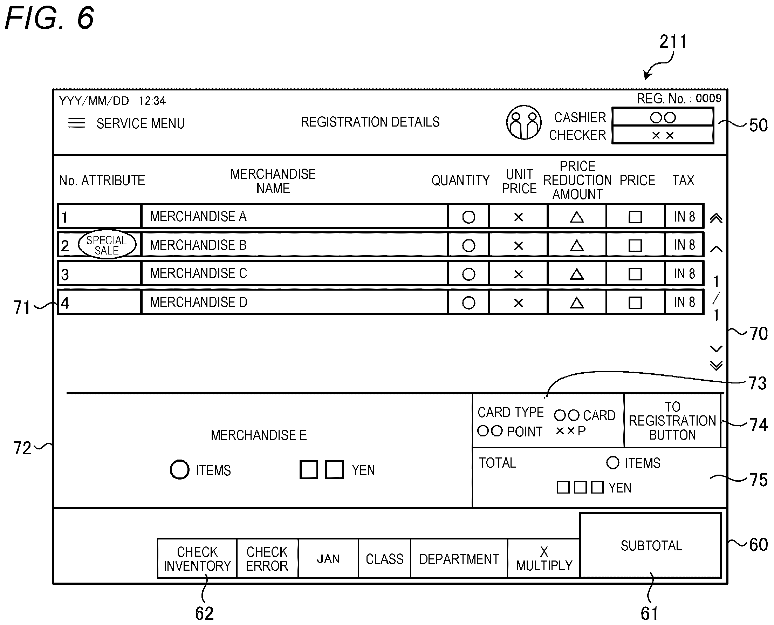

FIG. 6 shows a registration screen displayed on the first display unit 211 at the time of merchandise registration. On the registration screen, a header 50 is disposed at the top, a footer 60 is disposed at the bottom, and an information display section 70 is disposed in the middle.

In the header 50, a current time, characters of "registration details" indicating that the screen is a screen for displaying registration details, a register number indicating the number of the POS terminal 20, names of the cashier and the checker, and the like are displayed. A subtotal button 61 and various buttons 62 are displayed in the footer 60.

The information display section 70 includes a first merchandise information display section 71, a second merchandise information display section 72, a customer information display section 73, a shift button 74, and a transaction information display section 75. The first merchandise information display section 71 displays information about the merchandise subjected to merchandise registration so far. The displayed merchandise information may include a merchandise attribute (such as special sale flag or the like), a merchandise name, quantity (number of items), a unit price, a price reduction amount, an extended price, and a tax treatment type. The second merchandise information display section 72 displays information about the merchandise registered most recently. The displayed merchandise information includes a merchandise name, quantity, a purchase amount, and the like.

The customer information display section 73 displays customer information such as points owned by the customer. The customer information is displayed based on a membership code acquired by the POS terminal 20 from the reading device 10. The shift button 74 is operated when a merchandise to which no code symbol is attached is registered. When the shift button 74 is operated, the first display unit 211 displays a registration button screen on which a plurality of registration buttons corresponding to different merchandise are displayed. The transaction information display section 75 displays a total number of items and a total amount for all merchandise subjected to merchandise registration.

Referring back to FIG. 4, the transaction flow will be described. When the customer makes a payment, the subtotal button 61 is operated by an operation of the cashier. Accordingly, a settlement input for declaring settlement of a price is performed, and the POS system 1 receives the settlement input (ACT 3). The registration screen may also be displayed on the checker display unit 13 of the reading device 10.

Next, the POS terminal 20 executes a checkout process (ACT 4). When the checkout process executed by the POS terminal 20 is completed, the transaction ends. The checkout process includes a settlement process performed by the settlement process unit 2004, a display control process performed by the display control unit 2005, and a receipt dispensing process performed by the receipt dispensing unit 2006.

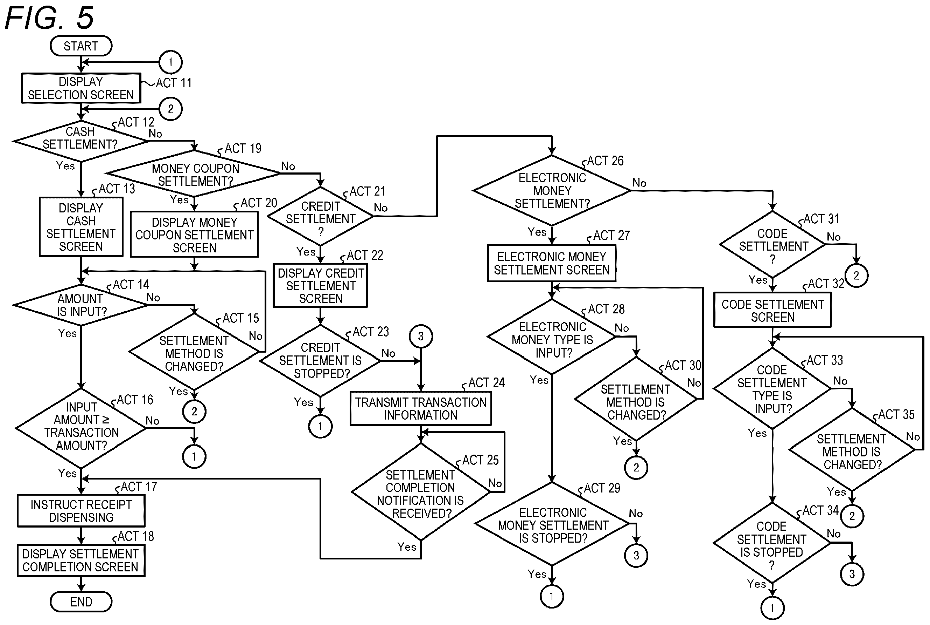

Next, the checkout process executed by the POS terminal 20 will be described below according to a screen displayed by the first display unit 211. FIG. 5 is a flow chart showing a flow of the checkout process performed by the control unit 200 of the POS terminal 20.

When the subtotal button 61 is operated on the registration screen in FIG. 6 and settlement input is performed on the input unit 2002, the display control unit 2005 displays a selection screen on the first display unit 211 (ACT 11). The selection screen is a screen for selecting a settlement method. The settlement method can be rephrased as a payment method. In the embodiment, the customer can pay by one or more settlement methods among cash, gift certificate, credit card, coupon voucher, electronic money, and code settlement.

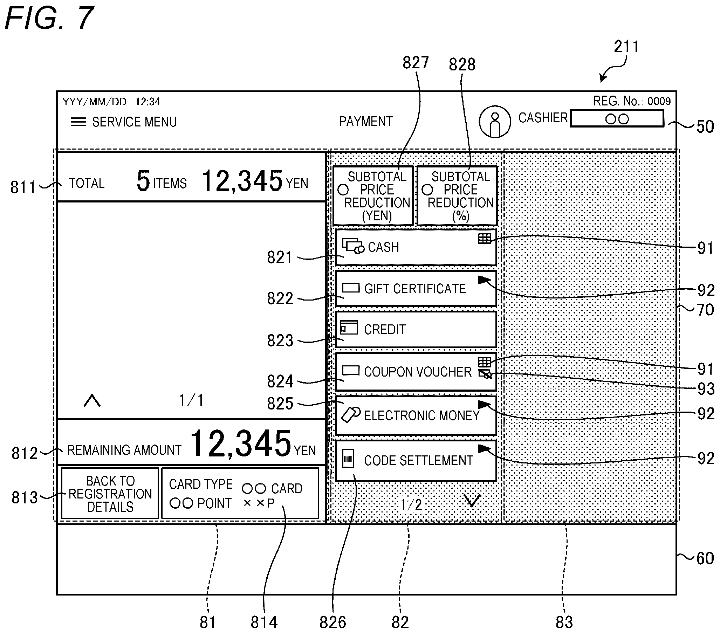

FIG. 7 shows the selection screen. In the following description of the screen, the same reference numerals are given to the same configurations as those on the previously described screen, and description thereof may be omitted. In the header 50 on the selection screen, characters of "payment" indicating that the screen is a screen for payment are displayed, and only the name of the cashier is displayed without displaying the name of the checker, which is different from the header 50 on the registration screen. No information is displayed in the footer 60 on the selection screen, which is different from the footer 60 on the registration screen. The information display section 70 on the selection screen includes the first display area 81, the second display area 82, and the third display area 83.

In the first display area 81, a transaction amount of the transaction on which the settlement process unit 2004 performs the settlement process is displayed. More specifically, the first display area 81 includes a transaction information display section 811, a remaining amount display section 812, a return button 813, and a customer information display section 814.

Information displayed on the transaction information display section 811 is the same information as that on the transaction information display section 75 on the registration screen. Specifically, the transaction information display section 811 displays a total number of items and a transaction amount for merchandise purchased by the customer. The transaction information display section 811 may also display the merchandise information about the merchandise purchased by the customer. The remaining amount display section 812 displays an unpaid amount (balance due) left for the transaction amount. In the shown example, the customer purchases five items of merchandise, the total amount due for the merchandise is 12,345 yen, and the remaining amount not paid by the customer is also 12,345 yen.

The return button 813 is a button operated when returning to the registration screen. The return button 813 is operated, for example, when the customer wants to cancel purchase of any of the already registered merchandise or when the customer wants to purchase another item of merchandise. Information displayed on the customer information display section 814 can be the same as that on the customer information display section 73 on the registration screen. Specifically, the customer information display section 814 displays customer information such as points held (accumulated) by the customer.

In the second display area 82, the settlement method to be performed by the settlement process unit 2004 according to the transaction amount is displayed in a selectable manner. Specifically, in the second display area 82, buttons for selecting various settlement methods, that is, operation elements corresponding to the settlement methods are displayed. More specifically, in the second display area 82, a cash button 821 for selecting cash settlement, a gift certificate button 822 for selecting gift certificate settlement, a credit button 823 for selecting credit settlement, a coupon voucher button 824 for selecting coupon voucher settlement, an electronic money button 825 for selecting electronic money settlement, and a code settlement button 826 for selecting code settlement are displayed. In the following description, when the buttons 821 to 826 are not particularly distinguished from each other, the buttons may each be referred to as a "settlement method selection button". In the second display area 82, a subtotal price reduction button 827 above the cash button 821 and a subtotal discount button 828 are displayed.

Icons 91, 92, 93 are displayed in association with a part or all of the settlement method selection buttons. The icons 91, 92, 93 indicate information for a subsequent process to be performed by the settlement process unit 2004 when the corresponding settlement method selection button is operated.

For example, the icon 91 provided on each of the cash button 821 and the coupon voucher button 824 is an icon represented by a numeric keypad mark. The icon 91 indicates that a numeric keypad will be displayed in the third display area 83 when the cash button 821 or the coupon voucher button 824 is operated. The icon 92 provided on each of the gift certificate button 822, the electronic money button 825, and the code settlement button 826 is an isosceles triangle mark whose apex is on a right side. The icon 92 indicates that a selection button will be displayed in the third display area 83 when the gift certificate button 822, the electronic money button 825, or the code settlement button 826 is operated. The icon 91 and the icon 92 are icons indicating that a screen for inputting certain information will be displayed thereafter when the corresponding operation element (settlement method selection button) is operated. In other words, the icon 91 and the icon 92 are icons indicating that an operation element for inputting information will be displayed during a subsequent step (display in the third display area).

The icon 93 provided on the coupon voucher button 824 is an icon represented by a mark on which diagonal lines are drawn on an illustration of cash. The icon 93 indicates that no change (currency) back will be paid in the coupon voucher settlement. Specifically, the icon 93 indicates that, when an amount of a coupon voucher used by the customer is larger than the transaction amount, a difference therebetween will not be paid as change (currency) back.

The number of settlement method selection buttons is not limited to that shown in the drawing and can be set as desired according to an operation of the store using the POS system 1. When the number of settlement method selection buttons is large, the second display area 82 can be scrolled up and down to display all the settlement method selection buttons.

Although nothing is depicted in the third display area on the selection screen in an embodiment, certain information may be displayed therein. For example, in the third display area on the selection screen, guidance for a subsequent operation may be displayed for the cashier. If the POS terminal 20 is a self-service POS terminal operated by the customer, advertisement information or the like may be displayed in the third display area on the selection screen.

Referring back to the flow chart in FIG. 5, the checkout process will be described. In a state in which the selection screen shown in FIG. 7 is displayed on the first display unit 211, the settlement process unit 2004 determines whether information indicating that cash settlement is selected is input to the input unit 2002 (ACT 12). In other words, the settlement process unit 2004 determines whether the cash button 821 is operated on the selection screen. When cash settlement is selected (Y in ACT 12), the display control unit 2005 displays, on the first display unit 211, a cash settlement screen (ACT 13).

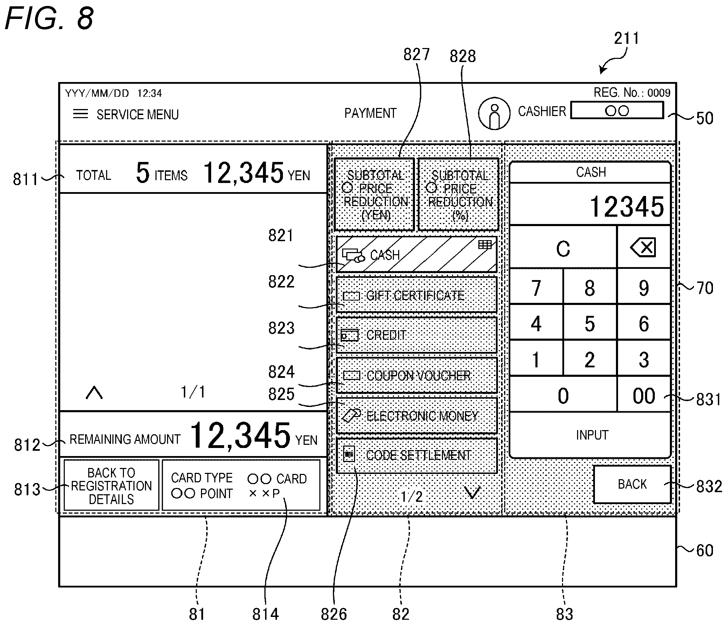

FIG. 8 shows the cash settlement screen. FIG. 8 shows a state after the cashier inputs an amount of cash deposited by the customer. The header 50 and the footer 60 on the cash settlement screen are similar to the header 50 and the footer 60 on the selection screen.

When the cash button 821 is operated on the selection screen, a numeric keypad 831 and a return button 832 are displayed in the third display area 83. The numeric keypad 831 is used to input the amount of cash deposited by the customer and includes a numeric key, a clear key, a character deletion key, an input key, an input amount display section, and the like. The return button 832 is a button for returning to the selection screen.

On the cash settlement screen, when an amount is input by the numeric keypad 831, the settlement method selection buttons other than the cash button 821 are grayed out and are inoperable. On the cash settlement screen, in a state in which no amount is input by the numeric keypad 831, the settlement method selection buttons other than the cash button 821 are not grayed out and are operable.

The cash settlement screen displays, on one screen, the transaction amount and the remaining amount displayed in the first display area 81, the settlement method selection button displayed in the second display area 82, and the numeric keypad displayed in the third display area 83. Accordingly, the cashier can browse various types of information on settlement on the one screen, and thus operability can be improved for the cashier as compared with a case where the numeric keypad 831 pops up on the selection screen. For example, the cashier can input an amount by operating the numeric keypad 831 while checking the transaction amount, the remaining amount, and the settlement method, and thus the operation is facilitated.

When the selection screen is shifted to the cash settlement screen, positions and area sizes of the first display area 81, the second display area 82, and the third display area 83 can be left unchanged in the first display unit 211. Therefore, when the selection screen is shifted to the cash settlement screen, the cashier can easily check a position of the displayed information, and thus operability can also be improved in this respect.

If the cash button 821 is operated but no amount has been input with the numeric keypad 831, another settlement method selection button can be operated. Therefore, if another settlement method selection button is operated, the settlement method can be changed without returning to the selection screen, and thus operability can also be improved in this respect. In some examples, other settlement method selection buttons may also be selectable even after an amount is input via the numeric keypad 831.

The description returns to the flow chart in FIG. 5. In a state in which the cash settlement screen shown in FIG. 8 is displayed on the first display unit 211, the settlement process unit 2004 determines whether an amount is input to the input unit 2002 (ACT 14). In other words, the settlement process unit 2004 determines whether an amount is input by the numeric key of the numeric keypad 831 and the input key is operated on the cash settlement screen.

When no amount is input to the input unit 2002 (N in ACT 14), specifically, when no amount is input and the settlement method selection buttons other than the cash button 821 are selectable, the settlement process unit 2004 determines whether the settlement method is changed (ACT 15). When no settlement method selection button other than the cash button 821 is operated and the settlement method is not changed (N in ACT 15), the control unit 200 returns to the process in ACT 14 and waits for input of an amount via the numeric keypad 831. When the payment method is changed on the cash settlement screen (Y in ACT 15), the control unit 200 returns to the process in ACT 12.

When an amount is input to the numeric keypad 831 and the input key is not operated, that is, when the return button 832 is operated in the state shown in FIG. 8, the control unit 200 returns to the process in ACT 11.

When an amount is input to the input unit 2002 (Y in ACT 14), the settlement process unit 2004 determines whether the input amount is equal to or larger than the transaction amount (ACT 16). When the input amount is less than the transaction amount (N in ACT 16), the control unit 200 returns to the process in ACT 11. At this time, the display control unit 2005 displays the selection screen, an amount displayed as the remaining amount in the first display area is not the transaction amount but a shortage amount, that is, an amount obtained by subtracting the input amount from the transaction amount. The customer can select the settlement method for the remaining amount again.

When the input amount is equal to or larger than the transaction amount (Y in ACT 16), the receipt dispensing unit 2006 instructs the receipt printer 23 to dispense a receipt (ACT 17). Next, the display control unit 2005 displays a settlement completion screen on the first display unit 211 (ACT 18). The settlement completion screen is a screen indicating to the cashier that the settlement is completed. Then, the control unit 200 ends the checkout process.

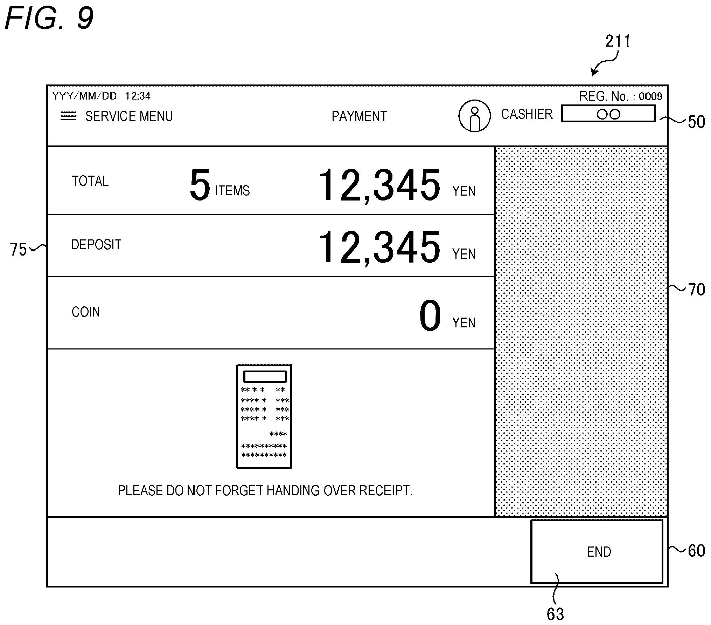

FIG. 9 shows the settlement completion screen. The header 50 on the settlement completion screen is similar to the header 50 on the cash settlement screen. An end button 63 is displayed in the footer 60 on the settlement completion screen. The end button 63 is a button for declaring end of the transaction and is operated when payment of the purchase price is completed. For example, once the cashier checks the settlement completion screen and then hands over change to the customer, the end button 63 is operated.

The information display section 70 on the settlement completion screen includes the transaction information display section 75. The transaction information display section 75 displays a total number of items and a total amount for the merchandise purchased by the customer, an amount deposited by the customer (an amount input by the numeric keypad 831) and a coin (change due) amount. The transaction information display section 75 displays a message prompting the cashier to pass the receipt to the customer. The cashier checks the change due amount displayed on the transaction information display section 75, and, when change is to be paid, the cashier can take out the change (currency) from the drawer 24 and pass the currency to the customer.

The description returns to the flow chart in FIG. 5. In the process in ACT 12, when input of the cash settlement is not performed (N in ACT 12), the settlement process unit 2004 determines whether information indicating that the money coupon settlement is selected is input to the input unit 2002 (ACT 19). In other words, the settlement process unit 2004 determines whether the gift certificate button 822 or the coupon voucher button 824 is operated on the selection screen. When the money coupon settlement is selected (Y in ACT 19), the display control unit 2005 displays a money coupon settlement screen on the first display unit 211 (ACT 20). Then, the control unit 200 proceeds to the process in ACT 14.

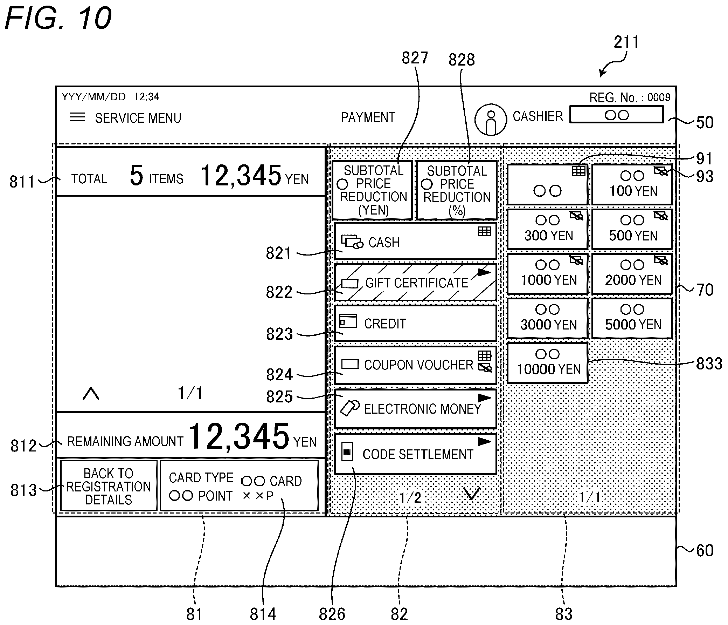

FIG. 10 shows the money coupon settlement screen. Here, a case where the gift certificate button 822 is operated will be described. The header 50 and the footer 60 on the money coupon settlement screen are similar to the header 50 and the footer 60 on the cash settlement screen.

When the gift certificate button 822 is operated on the selection screen, a plurality of type buttons 833 corresponding to types of gift certificates usable in the store are displayed in the third display area 83. When the gift certificate button 822 is operated, the settlement method selection buttons are not grayed out and are operable until the type button 833 is operated. The type buttons 833 are disposed in two columns, left and right, with five rows up and down in the left column and four rows up and down in the right column. The plurality of type buttons 833 can be classified into three groups, that is, A, B, and C.

The group A is the type button 833 on which a name of a company issuing the gift certificate and the icon 91 are displayed, and includes the type button 833 in an uppermost row in the left column. The type button 833 of the group A corresponds to a gift certificate of an amount other than amounts set for the other type buttons, for example, 1,500 yen. The cashier needs to separately input an amount after operating the type button 833 of the group A. Therefore, when the type button 833 of the group A is operated, the first display unit 211 pops up a numeric keypad for inputting the amount, for example. The type button 833 of the group A is provided with the icon 91 indicating that a numeric keypad is to be displayed thereafter.

The group B is the type button 833 on which a name of a company issuing the gift certificate, an amount, and the icon 93 are displayed, and includes five type buttons 833 in an uppermost row in the right column, in second rows in the left and right columns, and third rows in the left and right columns. Each type button 833 of the group B is a button on which the name of the issuing company and the amount are preset. The cashier can complete input of the amount simply by operating the type button 833 of the group B. No coin (currency) back can be received for the gift certificate corresponding to the type button 833 of the group B. The type button 833 of the group B is provided with the icon 93 indicating that no change (currency) will be issued after the use of the gift certificate. Accordingly, the cashier can notify the customer who is to use a gift certificate corresponding to the type button 833 of the group B that no change (currency) will be paid out as part of the transaction.

The group C is the type button 833 on which a name of a company issuing the gift certificate and an amount are displayed, and includes three type buttons 833 in fourth rows in the left and right columns and a fifth row in the left column. The type button 833 of the group C is a button on which the name of the issuing company and the amount are preset. The cashier can complete input of the amount simply by operating the type button 833 of the group C. Change back can be received for the gift certificate corresponding to the type button 833 of the group C. The type button 833 of the group C is not provided with the icon 93 indicating that no change will be paid.

When the coupon voucher button 824 is operated, the numeric keypad 831 is displayed in the third display area 83. The cashier operates the numeric keypad 831 to input an amount of a coupon voucher. When the coupon voucher button 824 is operated, type buttons may be displayed in the third display area 83 as in FIG. 10. In this case, the type buttons displayed in the third display area 83 may each be a button on which only an amount is displayed or an amount and an icon are displayed.

The money coupon settlement screen displays, on one screen, the transaction amount and the remaining amount displayed in the first display area 81, the settlement method selection buttons displayed in the second display area 82, and the type buttons 833 displayed in the third display area 83. Accordingly, as on the cash settlement screen, the cashier can browse various types of information about settlement on the one screen, and thus operability can be improved for the cashier.

When the selection screen is shifted to the money coupon settlement screen, the positions and the area sizes of the first display area 81, the second display area 82, and the third display area 83 can be left unchanged, and the settlement method can be easily changed by operating another settlement method selection button as on the cash settlement screen. Therefore, the money coupon settlement screen is similar in this respect to the cash settlement screen in the above respects, and thus operability can be improved for the cashier.

The description returns to the flow chart in FIG. 5. In the process in ACT 19, when input of the money coupon settlement is not performed (N in ACT 19), the settlement process unit 2004 determines whether information indicating that the credit settlement is selected is input to the input unit 2002 (ACT 21). In other words, the settlement process unit 2004 determines whether the credit button 823 is operated on the selection screen. When the credit settlement is selected (Y in ACT 21), the display control unit 2005 displays a credit settlement screen on the first display unit 211 (ACT 22).

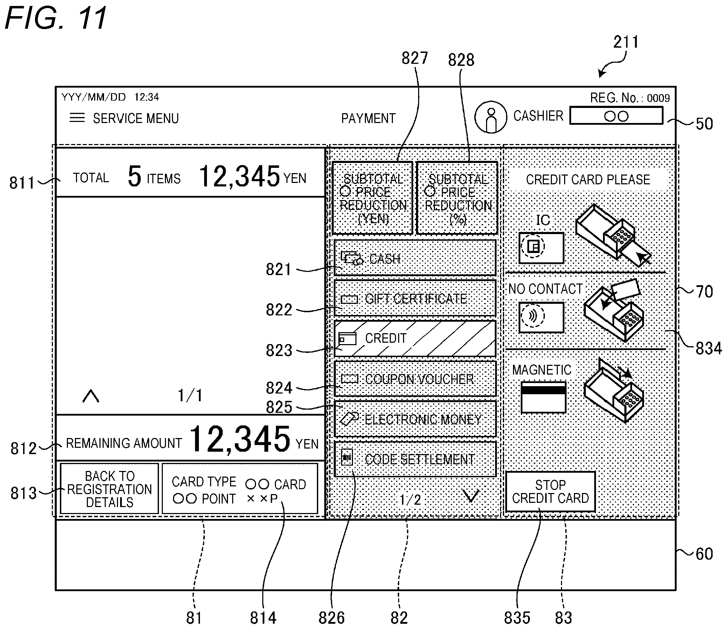

FIG. 11 shows the credit settlement screen. The header 50 and the footer 60 on the credit settlement screen are similar to the header 50 and the footer 60 on the cash settlement screen.

When the credit button 823 is operated on the selection screen, a guidance display section 834 and a stop button 835 are displayed in the third display area 83. When the credit button 823 is operated, transaction information including the transaction amount is transmitted to the settlement terminal 30, a process of the settlement terminal 30 is started, and thus the other settlement methods cannot be selected. Therefore, the other settlement method selection buttons are grayed out and inoperable.

The guidance display section 834 displays information for the cashier to guide the customer to operate the settlement terminal 30. For example, an operation method of the settlement terminal 30 according to a type of a credit card is displayed. The stop button 835 is a button for stopping the credit settlement and selecting another settlement method. Since the other settlement method selection buttons cannot be operated on the credit settlement screen, it is possible to return to the selection screen by operating the stop button 835.

The credit button 823 may be provided with an icon. In this case, the icon indicates guidance related to the operation of the settlement terminal 30 during the credit settlement as information for the selected settlement method.

The credit settlement screen is similar to the cash settlement screen in that the first display area 81, the second display area 82, and the third display area 83 are displayed in parallel on one screen, and that the positions and the area sizes of the first display area 81, the second display area 82, and the third display area 83 are not changed when the selection screen is shifted to the credit settlement screen. Therefore, in the above respects, operability can be improved for the cashier in the same manner as the cash settlement screen.

The description returns to the flow chart in FIG. 5. The settlement process unit 2004 determines whether the stop button 835 is operated on the credit settlement screen to stop the credit settlement (ACT 23). When the credit settlement is stopped (Y in ACT 23), the control unit 200 proceeds to the process in ACT 11 and waits for selection of a settlement method on the selection screen.

When the credit settlement is not stopped (N in ACT 23), for example, when the stop button 835 is not operated even when predetermined time elapses after the credit button 823 is operated, the transmission and reception unit 2001 transmits the transaction information including the transaction amount to the settlement terminal 30 (ACT 24). The settlement process unit 2004 determines whether the transmission and reception unit 2001 receives the settlement completion notification from the settlement server (ACT 25).

When the transmission and reception unit 2001 does not receive the settlement completion notification (N in ACT 25), the control unit 200 returns to the process in ACT 25. Based on the transaction information transmitted to the settlement terminal 30, the control unit 200 stands by until the settlement terminal 30 communicates with the settlement server to complete the settlement.

When the transmission and reception unit 2001 receives, from the settlement terminal 30, information indicating that the settlement cannot be performed, the display control unit 2005 displays error information on the first display unit 211 and the second display unit 212. The error information is information indicating that the credit settlement cannot be performed. When the transmission and reception unit 2001 receives the settlement completion notification from the settlement terminal 30 (Y in ACT 25), the control unit 200 proceeds to the process in ACT 17.

When input of the credit settlement is not performed in the process in ACT 21 (N in ACT 21), the settlement process unit 2004 determines whether information indicating that the electronic money settlement is selected is input to the input unit 2002 (ACT 26). In other words, the settlement process unit 2004 determines whether the electronic money button 825 is operated on the selection screen. When the electronic money settlement is selected (Y in ACT 26), the display control unit 2005 displays an electronic money settlement screen on the first display unit 211 (ACT 27).

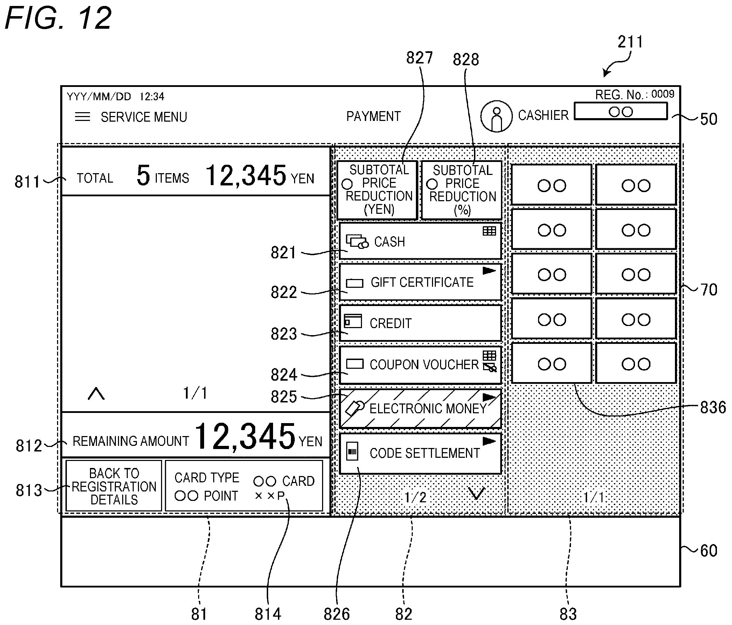

FIG. 12 shows the electronic money settlement screen. The header 50 and the footer 60 on the electronic money settlement completion screen are similar to the header 50 and the footer 60 on the cash settlement screen.

When the electronic money button 825 is operated on the selection screen, a plurality of electronic money type buttons 836 corresponding to types of electronic money are displayed in the third display area 83. When the electronic money button 825 is operated, the settlement method selection buttons are not grayed out and are operable until the electronic money type button 836 is operated. The electronic money type buttons 836 are disposed in two columns, left and right.

When the electronic money type button 836 is operated, the other settlement methods are not selectable. Therefore, when the electronic money type button 836 is operated, the other settlement method selection buttons are grayed out in the second display area 82 on a screen shifted from the electronic money settlement screen. In the third display area 83, a stop button can be displayed. The stop button can be operated when the electronic money settlement is to be canceled.

The electronic money settlement screen is similar to the cash settlement screen in that the first display area 81, the second display area 82, and the third display area 83 are displayed in parallel on one screen. The positions and the area sizes of the first display area 81, the second display area 82, and the third display area 83 can be left unchanged when the selection screen is shifted to the electronic money settlement screen. The settlement method can thus be easily changed by operating the other settlement method selection buttons. Therefore, in the above respects, operability can be improved for the cashier in the same manner as with the described cash settlement screen.

The description returns to the flow chart in FIG. 5. The settlement process unit 2004 determines whether the electronic money type button 836 is operated on the electronic money settlement screen and an electronic money type is input (ACT 28). When the electronic money type is input (Y in ACT 28), the settlement process unit 2004 determines whether the stop button is operated on the screen shifted from the electronic money settlement screen and the electronic money settlement is stopped (ACT 29).

When the electronic money settlement is stopped (Y in ACT 29), the control unit 200 proceeds to the process in ACT 11 and waits for selection of a settlement method on the selection screen. When the electronic money settlement is not stopped (N in ACT 29), for example, when the stop button is not operated even when predetermined time elapses after the electronic money type button 836 is operated, the control unit 200 shifts to the process in ACT 24 and instructs the settlement terminal 30 to perform settlement according to the selected electronic money type.

In the process in ACT 28, when the electronic money type is not input (N in ACT 28), the settlement process unit 2004 determines whether the settlement method is changed by operating another settlement method selection button (ACT 30). When the settlement method is not changed (N in ACT 30), the control unit 200 returns to the process in ACT 28. When the settlement method is changed (Y in ACT 30), the control unit 200 proceeds to the process in ACT 12.

In the process in ACT 26, when the electronic money settlement is not selected (N in ACT 26), the settlement process unit 2004 determines whether the code settlement is selected (ACT 31). In other words, the settlement process unit 2004 determines whether the code settlement button 826 is operated on the selection screen. When the code settlement is selected (Y in ACT 31), the display control unit 2005 displays a code settlement screen on the first display unit 211 (ACT 32).

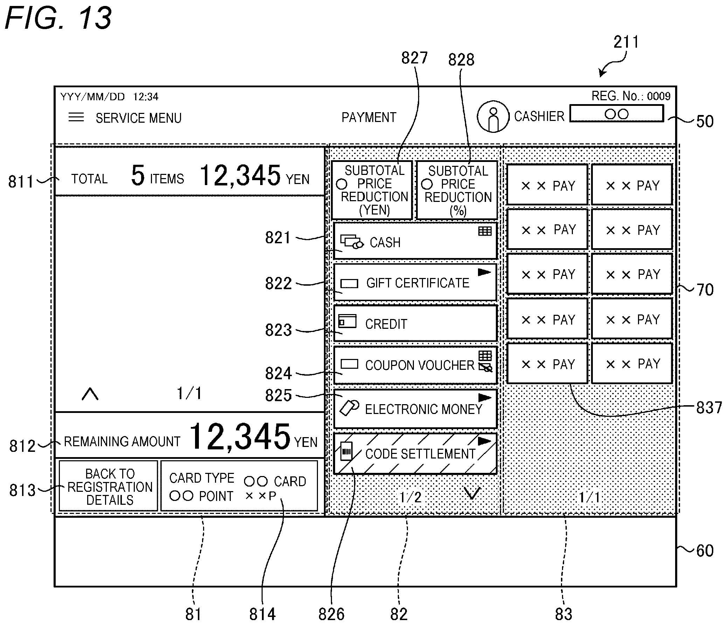

FIG. 13 shows the code settlement screen. The header 50 and the footer 60 on the code settlement screen are similar to the header 50 and the footer 60 on the cash settlement screen.

When the code settlement button 826 is operated on the selection screen, a plurality of code settlement type buttons 837 corresponding to types of the code settlement are displayed in the third display area 83. When the code settlement button 826 is operated, the settlement method selection buttons are not grayed out and are operable until the code settlement type button 837 is operated. The code settlement type buttons 837 are disposed in two columns, left and right.

When the code settlement type button 837 is operated, the other settlement methods are not selectable. Therefore, when the code settlement type button 837 is operated, the other settlement method selection buttons are grayed out in the second display area 82 on a screen shifted from the code settlement screen. In the third display area 83, a stop button can be displayed. The stop button can be operated when the code settlement is to be canceled.

The code settlement screen is similar to the cash settlement screen in that the first display area 81, the second display area 82, and the third display area 83 are displayed in parallel on one screen. The positions and the area sizes of the first display area 81, the second display area 82, and the third display area 83 can be left unchanged when the selection screen is shifted to the code settlement screen. Thus, the settlement method can be easily changed by operating the other settlement method selection buttons. Therefore, operability can be improved for the cashier in the same manner as the described cash settlement screen.

The description returns to the flow chart in FIG. 5. The settlement process unit 2004 determines whether the code settlement type is input by operating the code settlement type button 837 on the code settlement screen (ACT 33). When the code settlement type is input (Y in ACT 33), the settlement process unit 2004 determines whether the stop button is operated on the screen shifted from the code settlement screen and the code settlement is stopped (ACT 34).

When the code settlement is stopped (Y in ACT 34), the control unit 200 proceeds to the process in ACT 11 and waits for selection of a settlement method on the selection screen. When the code settlement is not stopped (N in ACT 34), the control unit 200 proceeds to the process in ACT 24 and instructs the settlement terminal 30 to perform settlement according to the selected code settlement type.

In the process in ACT 33, when the code settlement type is not input (N in ACT 33), the settlement process unit 2004 determines whether the settlement method is changed by operating another settlement method selection button (ACT 35). When the settlement method is not changed (N in ACT 35), the control unit 200 returns to the process in ACT 33. When the settlement method is changed (Y in ACT 35), the control unit 200 proceeds to the process in ACT 12.

In the process in ACT 31, when the code settlement is not selected (N in ACT 31), the control unit 200 returns to the process in ACT 12.

Through the above checkout process, the customer can pay the purchase price by any one of the cash settlement, the gift certificate settlement, the credit settlement, the coupon voucher settlement, the electronic money settlement, the code settlement, or a combination of these settlement methods. As described above, the POS terminal 20 can improve the operability for the cashier by implementation of the above checkout process.

Next, a modification of the POS terminal 20 will be described. In the modification, the POS terminal 20 includes an automatic coin machine instead of the drawer 24. The automatic coin machine is a well-known machine and has a function of receiving cash such as paper money or coins, recognizing the amount of the deposited money, and dispensing change as necessary. Therefore, in the POS terminal 20 according to the modification, the cashier does not normally need to input the amount of cash deposited by the customer at the time of the cash settlement.

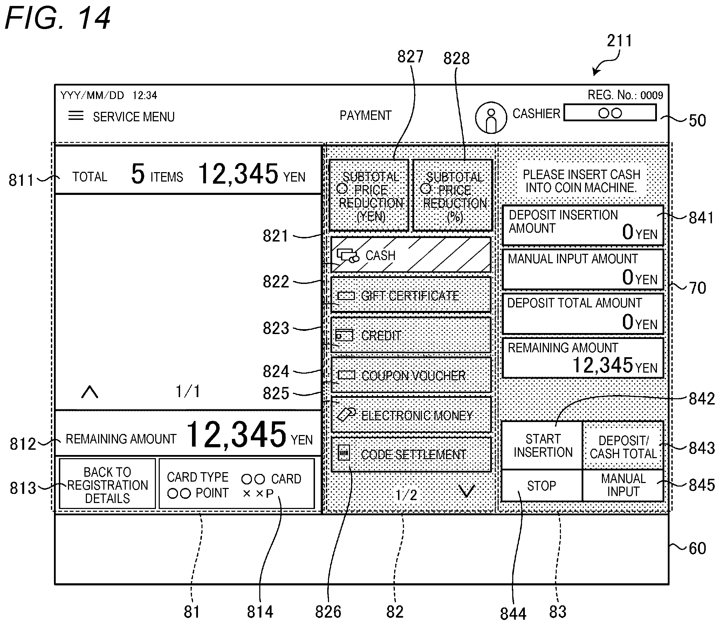

FIG. 14 shows a cash settlement screen in the present modification. FIG. 14 shows a state before the cashier (or customer) inserts cash into the automatic coin machine. Here, differences from the cash settlement screen in FIG. 8 will be described.

On the cash settlement screen in this modification, a deposit amount display section 841, an insertion start button 842, a deposit/cash total button 843, a stop button 844, and a manual input button 845 are displayed in the third display area 83.

The deposit amount display section 841 displays a message "please insert cash into the coin machine", a deposit insertion amount, a manual input amount, and a deposit total amount. The deposit insertion amount indicates an amount of cash that has been inserted into the automatic coin machine. The manual input amount indicates the amount of money that has been manually input. A case where the amount must be manually input is, for example, a case where the amount of cash inserted into the automatic coin machine cannot be recognized or the cash is returned by the automatic coin machine. The deposit total amount indicates the total of the deposit insertion amount and the manual input amount. A remaining amount indicates the amount obtained by subtracting the deposit total amount from the transaction amount.

The insertion start button 842 is a button operated when cash is inserted into the automatic coin machine. The deposit/cash total button 843 is a button operated when input of the amount into the coin machine is completed. The deposit/cash total button 843 is grayed out and inoperable until the amount inserted into the automatic coin machine is equal to or larger than the transaction amount. When the deposit/cash total button 843 is operated, the first display unit 211 displays the settlement completion screen.

The stop button 844 is a button operated when the cash settlement is stopped. The stop button 844 is grayed out and inoperable after cash is inserted into the automatic coin machine. In a state in which no cash is inserted into the automatic coin machine shown in FIG. 14, the stop button 844 may be grayed out, and the other settlement method selection buttons displayed in the second display area may not be grayed out. In this case, it is possible to select another settlement method without operating the stop button 844. The manual input button 845 is operated when the cashier manually inputs an amount of cash deposited by the customer. When the manual input button 845 is operated, a numeric keypad for inputting an amount is displayed. The numeric keypad may be popped up on the cash settlement screen or may be displayed by shifting to the cash settlement screen shown in FIG. 8.

The cash settlement screen in the modification is a display screen suitable for the POS terminal 20 including the automatic coin machine and can improve the operability for the cashier as in the above-described example.

Next, a modification of the customer information display section 814 displayed in the first display area will be described. In this modification, the customer information display section 814 can be displayed in an enlarged manner as necessary. The customer information display section 814 normally displays first customer information and displays second customer information in addition to the first customer information when enlarged.

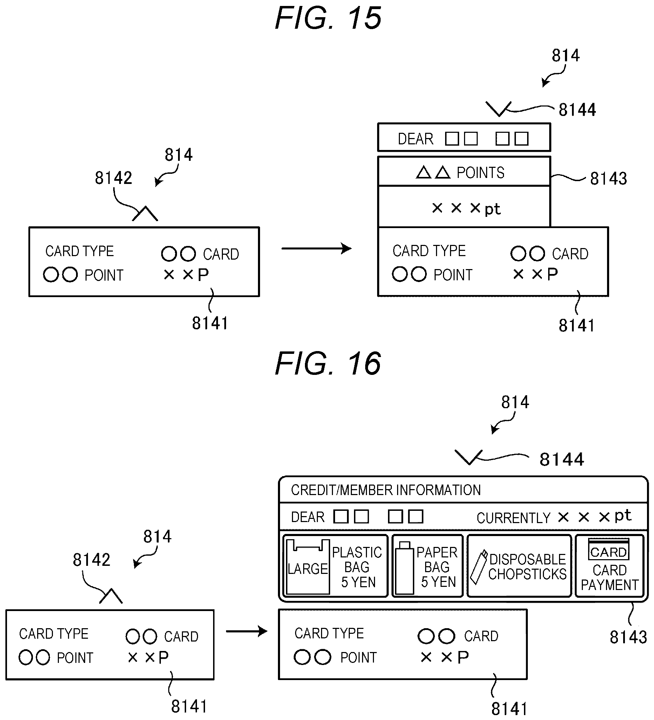

FIG. 15 shows an example of the customer information display section 814 in the modification. The customer information display section 814 displays a first information display section 8141 and an enlargement arrow 8142.

The first information display section 8141 displays a type of a card and the number of points associated with the card as the first customer information. For example, the first information display section 8141 displays a name of a store membership card and the number of points of a point service that is associated with the store membership card and managed independently by the store. The enlargement arrow 8142 is operated when the customer information display section 814 is to be displayed in an enlarged manner.

When the enlargement arrow 8142 is operated, the customer information display section 814 is displayed in an enlarged manner, and a second information display section 8143 and a reduction arrow 8144 are displayed in addition to the first information display section 8141. The second information display section 8143 displays a name of the customer, a name of another point service, and the number of points of the other point service as the second customer information. The reduction arrow 8144 is operated when the customer information display section 814 is to be displayed in a normal manner, that is, to be reduced in size.

In the embodiment, when the enlargement arrow 8142 is operated, the customer information display section 814 is enlarged upward to overlap a display field of the remaining amount. However, a direction of the enlargement is not limited to the upward direction, and the enlargement can be performed in any direction.

FIG. 16 shows another example of the customer information display section 814 in the modification. In this example, the second customer information displayed on the second information display section 8143 is different from the example in FIG. 15. In the second customer information in FIG. 16, additional information is shown in addition to the name of the customer and the number of points owned by the customer.

The additional information is a card payment icon, a disposable chopstick icon, a paper bag icon, a plastic bag icon, or the like. The card payment icon is displayed, for example, when the customer selects card payment at the time of membership registration and a membership code is associated with the card payment. The disposable chopstick icon, the paper bag icon, and the plastic bag icon are displayed when the customer inputs a request for disposable chopsticks, a paper bag, or a plastic bag on a touch panel of the customer display unit 15 of the reading device 10. The cashier can check these icons and hand over the disposable chopsticks, the paper bag, and the plastic bag to the customer as necessary.

As described above, a POS terminal 20 according to an embodiment includes a transmission and reception unit 2001 (acquisition unit) that acquires the merchandise information about a transaction object, a settlement process unit 2004 that executes the settlement process for the transaction based on the merchandise information acquired by the transmission and reception unit 2001, and a display control unit 2005 that displays, on one screen of the first display unit 211 (display unit), the first display area 81 in which the transaction amount for the transaction being settled by the settlement process unit 2004 is displayed, the second display area 82 in which a settlement method to be performed is displayed in a selectable manner, and the third display area 83 in which the information for the selected settlement method is displayed.

Accordingly, the cashier can browse various types of information for settlement on one screen, and thus the POS terminal 20 can improve operability for the cashier.

The display control unit 2005 of the POS terminal 20 according to the embodiment displays, in the third display area 83, an operation element (a numeric keypad or a button) for inputting information necessary for a settlement process related to the selected settlement method as information for the selected settlement method.

Accordingly, the cashier can check the transaction amount and the settlement method and input information necessary for the settlement process on one screen, and thus the POS terminal 20 can further improve the operability for the cashier.

Further, the display control unit 2005 of the POS terminal 20 according to the embodiment displays, in the third display area 83, an operation guidance that guides an operation according to the selected settlement method as information for the selected settlement method.

Accordingly, the cashier can recognize the operation necessary for the settlement process according to the selected settlement method, and thus the POS terminal 20 can improve the operability for the cashier also in this respect.

In addition, the display control unit 2005 of the POS terminal 20 according to the embodiment shifts the screen without changing the positions and the sizes of the first display area 81, the second display area 82, and the third display area 83.

Accordingly, for example, when the first display unit 211 shifts from the selection screen to the cash settlement screen, the operator can easily check a position of information displayed in each display area, and thus the POS terminal 20 can improve the operability for the operator also in this respect.

In addition, the display control unit 2005 of the POS terminal 20 according to the embodiment displays an operation element (settlement method selection button) corresponding to the settlement method in the second display area 82 and displays an icon indicating information for a subsequent process to be performed by the settlement process unit 2004 in association with the operation element when the operation element is operated.

Accordingly, since the operator can recognize the information for the subsequent process when the operation element is selected in the second display area 82, the POS terminal 20 can further improve the operability for the operator.

In an embodiment, a control program executed by the POS terminal 20 may be provided by being recorded in a non-transitory, computer-readable recording medium such as a CD-ROM. In addition, a control program executed by the POS terminal 20 in an embodiment may be stored in a computer connected to a network such as the Internet and provided by being downloaded or accessed via the network such as the Internet.

A checkout device of an embodiment may be of a cloud type. In an example, the checkout device may not include the merchandise master 222 and the merchandise information unit 2031, and information stored therein may be managed on a cloud server capable of communicating with the checkout device as needed. In such a case, the checkout device includes a control program for displaying the above-described various display screens, and a program for communicating with peripheral devices, such as a receipt printer, and a cloud server.

Although the embodiment according to the present disclosure is described above, the embodiment is presented as an example and is not intended to limit the scope of the present disclosure. The embodiment can be implemented in various other forms, and various omissions, substitutions, and changes can be made without departing from the gist of the present disclosure. The embodiment and the modification thereof are included in the scope and gist of the present disclosure and are included in the scope of the present disclosure disclosed in the claims and equivalents thereof.

## Claims

1. A checkout device comprising:
an acquisition unit configured to acquire merchandise information for an item of merchandise in a transaction;
a settlement process unit configured to execute a settlement process for a transaction based on the merchandise information acquired by the acquisition unit; and
a display control unit configured to display, on the same screen of a display unit, a first display area in which a transaction amount for the transaction is displayed, a second display area in which settlement methods for the settlement process are displayed in a selectable manner, and a third display area in which information for a selected settlement method is displayed.

2. The checkout device according to claim 1, wherein the display control unit displays, in the third display area, an operation element for input of information necessary for a settlement process according to the selected settlement method as the information about the selected settlement method.

3. The checkout device according to claim 1 or 2, wherein the display control unit displays, in the third display area, operation guidance for guiding a user operation according to the selected settlement method as the information about the selected settlement method.

4. The checkout device according to any one of claims 1 to 3, wherein the display control unit shifts the screen of the display unit without changing positions and sizes of the first display area, the second display area, and the third display area.

5. The checkout device according to any one of claims 1 to 4, wherein the display control unit displays an icon indicating information about a subsequent process to be performed by the settlement process unit in association with an operation element of a selectable operating element corresponding to a selectable settlement method.

6. A non-transitory, computer-readable medium storing program instructions which when executed by a checkout device causes the checkout device to perform a method comprising:
acquiring merchandise information for an item being registered for purchase in a transaction;
executing a settlement process for the transaction based on the acquired merchandise information; and
causing a display screen to display, on the same screen at the same time:
a first display area in which a transaction amount for the transaction is displayed,
a second display area in which at least one settlement method to be used for the settlement process is displayed in a selectable manner, and
a third display area in which information about a selected settlement method is displayed.

7. The non-transitory, computer-readable medium according to claim 6, wherein an operation element for input of information necessary for performing the selected settlement method is displayed in the third display area as the information about the selected settlement method.

8. The non-transitory, computer-readable medium according to claim 6 or 7, wherein an operation guidance for guiding a user operation according to the selected settlement method is displayed in the third display areas as the information about the selected settlement method.

9. The non-transitory, computer-readable medium according to any one of claims 6 to 8, the method further comprising:
shifting screens displayed on the display screen without changing the positions and sizes of the first display area, the second display area, and the third display area.

10. The non-transitory, computer-readable medium according to any one of claims 6 to 9, wherein
an operation element corresponding to a settlement method is displayed in the second display area, and
an icon indicating information about a subsequent process to be performed when using the corresponding settlement method is displayed in association with the operation element.
